# EUROPÄISCHE PATENTSCHRIFT

(11) **EP 3 818 601 B1**
(45) Veröffentlichungstag und Bekanntmachung des Hinweises auf die Patenterteilung: **19.07.2023**
(21) Anmeldenummer: 19735258.6
(22) Anmeldetag: 26.06.2019
(51) Int. Cl.: H02B 1/28, H02B 1/46

(54) **EXPLOSIONSGESCHÜTZTES GEHÄUSE MIT DRUCKENTLASTUNG**
EXPLOSION-PROOF HOUSING WITH PRESSURE RELIEF
BOÎTIER ANTIDÉFLAGRANT AVEC AGENCEMENT DE DÉCOMPRESSION

(30) Priorität: 06.07.2018 DE 102018116397
(43) Veröffentlichungstag der Anmeldung: 12.05.2021
(73) Patentinhaber: R. STAHL Schaltgeräte GmbH, 74638 Waldenburg (DE)
(72) Erfinder: ARNHOLD, Thorsten, 74629 Pfedelbach (DE)
(74) Vertreter: Rüger Abel Patentanwälte PartGmbB
(86) Internationale Anmeldenummer: PCT/EP2019/067068
(87) Internationale Veröffentlichungsnummer: WO 2020/007689

(56) Entgegenhaltungen:
- EP-A1- 1 542 325
- DE-B3- 10 313 723
- DE-U1-202006 004 829
- US-A- 2 789 238

## Beschreibung

Die Erfindung betrifft ein Gehäuse zur Aufnahme von Elementen, die Zündquellen bilden können, wobei das Gehäuse zum Einsatz in explosionsgefährdeter Umgebung geeignet ist.

Explosionsgeschützte Gehäuse sind in verschiedenen Bauformen bekannt. Typischerweise sind solche Gehäuse mit mindestens einer Druckentlastungsöffnung versehen, an der eine Flammensperre angeordnet ist. Ein solches Gehäuse zeigt beispielsweise die GB 778040, deren Gehäuse eine rechteckige Druckentlastungsöffnung aufweist, an der mittels eines Klemmrahmens eine Flammensperre in Gestalt eines porösen Körpers festgeklemmt ist.

Auch die US 4,180,177 A veranschaulicht ein explosionsgeschütztes Gehäuse mit einer Druckentlastungsöffnung, in der ein poröser Körper als Flammensperre angeordnet ist. Die Druckentlastungsöffnung kann außerdem durch einen beweglich gelagerten Deckel abgedeckt sein.

Wie die DE 10 2005 042 565 B4 zeigt, ist es auch schon vorgeschlagen worden, ein explosionsgeschütztes Gehäuse komplett aus einem aufgrund seiner Porosität gasdurchlässigen jedoch flammensperrenden Material auszubilden. Das Gehäuse umfasst dann ein rohr- oder becherförmiges Gehäuseteil, das die Gehäusewand bildet und den Innenraum von der Umgebung trennt.

Weiter offenbart die DE 10 2006 048 943 A1 einen Druckausgleichzylinder mit einer Rohrmembran. Die Rohrmembran besteht aus einem porösen Material und ist somit gasdurchlässig. Sie ist in dem Druckausgleichszylinder an beiden Enden gefasst, wobei der Druckausgleichzylinder an einem Ende Einlassöffnungen und an seinem anderen Ende eine Gasauslassöffnung aufweist. In dem Druckausgleichszylinder können auch mehrere solcher Rohrmembranen gefasst sein.

Aus der DE 20 2006 004 829 U ist eine Druckausgleichsverschraubung mit einem als poröse Rohrmembran ausgebildetes Druckausgleichselement. Die Rohrmembran ist aus Kunststoffmaterial, welches durch seine symmetrische Porenstruktur hydrophoben Charakter aufweist.

Aus der DE 103 13 723 B3 ist eine Baueinheit zur Aufnahme von Absorberelementen bekannt. Diese Baueinheit weist eine käfigartige Grundstruktur auf, die dazu eingerichtet ist, mehrere neben- und übereinander gestapelte Absorptionselemente aufzunehmen. Diese Absorptionselemente weisen Durchgangskanäle auf und sind aus einem offen porösen Material ausgebildet, um den Gasstrom in ihren Durchgangskanälen zu verwirbeln.

Weiter ist aus der US 2 789 238 ein flammengeschützter Gebläsemotor mit ringförmigen Flammenfiltern bekannt. Diese werden durch Blechlagen gebildet, wobei zwischen den einzelnen Lagen spaltförmige Durchgänge verbleiben, die flammenhemmend wirken.

Im Folgenden sind die Ausdrücke Druckausgleichsöffnung und Druckentlastungsöffnung sowie Druckausgleichskörper und Druckentlastungskörper als Synonym zu verstehen.

Es ist Aufgabe der Erfindung, ein Gehäuse zur Aufnahme von Elementen zu schaffen, die Zündquellen bilden können, wobei das zugrundeliegende Konzept auch für besonders große Gehäuse geeignet sein soll.

Diese Aufgabe wird mit dem Gehäuse nach Anspruch 1 gelöst:
Das erfindungsgemäße Gehäuse ermöglicht den Einsatz von Druckausgleichskörpern, deren gasdurchlässige Oberfläche größer ist als der Querschnitt der Druckentlastungsöffnung. Damit ist es möglich, dem bei einer im Gehäuse stattfindenden Explosion erzeugten und aus dem Gehäuse auszuleitenden Gasvolumen einen besonders niedrigen Strömungswiderstand entgegenzusetzen, was den Aufbau einer Druckspitze in dem Gehäuse entgegenwirkt. Damit kann die Wandstärke des betreffenden Gehäuses verringert werden, ohne die Sicherheit und Integrität des Gehäuses zu gefährden.

Der Druckausgleichskörper ist unmittelbar in dem Innenraum des Gehäuses angeordnet, was insbesondere bedeutet, dass er nicht gesondert eingehaust ist. Auch dies trägt zur Vermeidung einer Drosselung der nötigen druckausgleichenden Gasströmung bei. Andererseits liegt der Druckausgleichskörper in dem Gehäuseinnenraum vor Umwelteinflüssen geschützt. Weil lediglich ein geringer Querschnitt für die Druckausgleichsöffnung erforderlich ist, wird die mechanische Stabilität der Gehäusewand durch die Druckausgleichsöffnung nicht beeinträchtigt.

Der Druckausgleichskörper kann in einer ersten Ausführungsform den Innenraum vollständig durchquerend ausgebildet und angeordnet sein. Er schließt dabei vorzugsweise mit seinen beiden Enden jeweils an eine Druckausgleichsöffnung und somit an insgesamt zwei Druckausgleichsöffnungen an. Dieses Konzept ermöglicht die Nutzung von Druckausgleichsöffnungen mit besonders geringem Querschnitt und eignet sich insbesondre auch für den Einsatz in besonders großen Gehäusen.

Es ist jedoch auch möglich, den Druckausgleichskörper mit lediglich einem offenen Ende becherförmig auszubilden, wobei sein offenes Ende an die Druckausgleichsöffnung anschließt und sein geschlossenes Ende in den Innenraum ragt.

Der Druckausgleichskörper ist an der Druckausgleichsöffnung mechanisch mit der Wandanordnung des Gehäuses verbunden. Dazu kann der Druckausgleichskörper vorzugsweise durch eine ringförmige Schweißnaht mit dem Rand der Druckausgleichsöffnung verschweißt sein. Der rohrförmige Druckausgleichskörper kann dazu die Druckausgleichsöffnung durchsetzen oder stirnseitig an der Innenseite der Gehäusewand anliegen. Die den Druckausgleichskörper mit der Gehäusewand verbindende Schweißnaht kann an der Innenseite der Gehäusewand oder an der Außenwand derselben angebracht sein. Es ist auch möglich, den rohrförmigen Druckausgleichskörper in einem Sockel zu fassen, der seinerseits mit der Gehäusewand verbunden ist. Zur Fassung des Druckausgleichskörpers in dem Sockel kann der Druckausgleichskörper mit dem Sockel insbesondere stoffschlüssig verbunden sein, beispielsweise durch Kleben, Schweißen oder Löten. Der Sockel kann mit dem Gehäuse verklebt, verschweißt oder verschraubt sein.

Die Druckausgleichsöffnung kann mit einer Schutzeinrichtung, wie zum Beispiel einer Berstscheibe, einem Deckel, einer Membran oder einem Stopfen verschlossen sein, wobei diese Schutzeinrichtung druckabhängig öffnet. Die Schutzeinrichtung wird vorzugsweise durch einen Verschluss gebildet, der die Druckausgleichsöffnung insektensicher abdichtet und das Eindringen von Feuchtigkeit oder Wasser verhindert.

Der Druckausgleichskörper ist rohrförmig ausgebildet. Unter einem rohrförmigen Druckausgleichskörper wird jeder Druckausgleichskörper verstanden, der einen Druckausgleichskanal mit einer wenigstens partiell gasdurchlässigen Wandung umschließt. Der Querschnitt dieses Druckausgleichskörpers kann rund oder polygonal begrenzt sein. Zum Beispiel kann der Druckausgleichskörper durch ein Rechteckrohr gebildet sein, das an seinen Flanken ein oder mehrere Ausschnitte aufweist, die jeweils durch flache Druckausgleichselemente verschlossen sind. Diese können mit dem Rechteckrohr verschweißt, verklebt, verschraubt oder anderweitig an diesen angebracht sein. Es ist auch möglich, den Druckausgleichskörper vollständig aus einem gasdurchlässigen Material auszubilden. Das gasdurchlässige Material kann beispielsweise Metall, eine Metalllegierung, eine Keramik ein Glas oder auch ein unbrennbares organisches festes Material oder ein Gemisch aus den genannten Materialien sein. Das Material weist Poren auf und kann dazu in Form von Schaum, in Form von miteinander verschlungenen oder/oder miteinander verklebten und/oder versinterten Drähten, in Form von Pulver oder Partikeln vorliegen, die miteinander durch Kleben, Löten, Sintern, Schweißen oder mechanisch verbunden sind. Fasern, Fäden, Drähte, Partikel oder können auch als lose Packung in einem Gehäuse gehalten sein, wobei das gefüllte Gehäuse den Druckentlastungskörper bildet.

Vorteilhafte Einzelheiten der Erfindung ergeben sich aus der Zeichnung, der zugehörigen Beschreibung oder aus Unteransprüchen. Es zeigen:
Figur 1 das erfindungsgemäße Gehäuse, in einer vereinfachten perspektivischen Darstellung,
Figur 2 das Gehäuse nach Figur 1, in vereinfachter Vertikalschnittdarstellung,
Figur 3 eine Ausführungsform eines Druckentlastungskörper, in Querschnittsdarstellung,
Figur 4 eine alternative Ausführungsform eines Druckentlastungskörpers, in Querschnittsdarstellung und
Figur 5 bis 10 weitere Ausführungsformen eines Gehäuses entsprechend Figur 1 jeweils, in vereinfachter Vertikalschnittdarstellung.

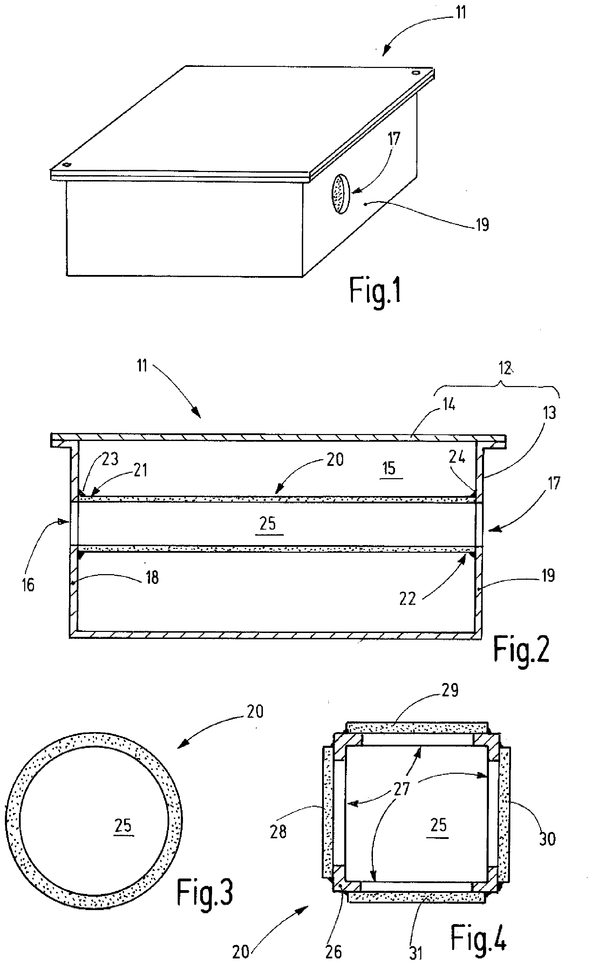

In Figur 1 ist ein Gehäuse 11 veranschaulicht, das für den Einsatz in explosionsgefährdeter Umgebung eingerichtet ist. Das Gehäuse 11 dient der Aufnahme von Komponenten, beispielsweise elektronischen oder elektrischen Bauelementen, die im Betrieb Zündquellen für ein explosives Gasgemisch bilden können. Zur Aufnahme solcher Komponenten ist das Gehäuse 11, wie Figur 2 zeigt, von einer Wandanordnung 12 gebildet, zu der ein Gehäusekörper 13 und ein Deckel 14 gehören. Die Wandanordnung 12 umschließt einen Innenraum 15, in dem die oben genannten Komponenten angeordnet werden können. Der Innenraum kann ein Volumen von mehreren Litern bis mehreren 100 Litern aufweisen. Prinzipiell ist dieses Gehäusekonzept jedoch auch für kleinere Gehäuse anwendbar.

Die Wandanordnung 12 weist beispielsweise im Bereiche des Gehäusekörpers 13 oder auch an dem Deckel 14 mindestens eine vorzugsweise zwei Druckentlastungsöffnungen 16, 17 auf, die vorzugsweise an zwei im Abstand parallel zueinander angeordneten Wandbereichen 18, 19 angeordnet sind. Die Druckentlastungsöffnungen 16, 17 sind vorzugsweise miteinander fluchtend angeordnet. Zwischen den Wandbereichen 18, 19 ist ein Druckentlastungskörper 20 angeordnet, der ganz oder teilweise aus einem gasdurchlässigen porösen jedoch flammenhemmenden Material ausgebildet ist und den Abstand zwischen den Wandbereichen 18, 19 überbrückt. Beispielsweise kann der Druckentlastungskörper aus gesinterten Metallkugeln, Metallpulvern, mehreren übereinander liegenden zu einem Rohr gewickelten Drahtgewebelagen oder dergleichen bestehen. Der Druckentlastungskörper 20 ist rohrförmig (z.B. als Rundrohr oder als Rohr mit Plolygonalquerschnitt) ausgebildet und an seinen beiden Enden 21, 22 mit der Wandanordnung 12, speziell mit dem ersten Wandbereich 18 und dem zweiten Wandbereich 19, verbunden. Dabei kann der Druckentlastungskörper 20, wie es Figur 3 nahelegt als zylindrisches Rohr ausgebildet sein, das mit seinen Stirnseiten an der Innenseite der Wandbereiche 18, 19 anliegt und dort zum Beispiel mittels ringförmiger Schweißnähte 23, 24 mit den Wandbereichen 18, 19 verbunden ist.

Der Druckentlastungskörper 20 weist Poren auf, deren Weite so gering und deren Länge so groß ist, dass Flammen aus dem Innenraum 15 nicht in den inneren Strömungskanal 25 des Druckentlastungskörpers 20 gelangen können. Auch können auf diesem Weg keine glühenden Partikel in den Strömungskanal 25 gelangen. Der Strömungskanal 25 führt durch die beiden Druckentlastungsöffnungen 16, 17 ins Freie. Der Druckentlastungskörper 20 kann aus metallischem oder aus nicht metallischem Material ausgebildet sein. Das betreffende Material, wie Metall, Keramik, Glas oder dergleichen, kann in Form von Partikeln, Kugeln, Fäden oder Schaum durch Sintern, Kleben oder mechanisches Verbinden zu einem stabilen Körper geformt sein.

Das Konzept des rohrförmigen Druckentlastungskörpers 20 kann auch in Gestalt eines Polygonalrohrs verwirklicht sein, wie es Figur 4 anhand eines Rechteckrohrs veranschaulicht. Der Druckentlastungskörper 20 nach Figur 4 besteht aus einem Rechteckrohr 26 mit rechteckigem oder quadratischem Querschnitt, das an seinen Flanken Gasdurchtrittsöffnungen 27 aufweist, die quer zur von den Strömungskanal 25 vorgegebenen Strömungsrichtung eine Verbindung zwischen dem Innenraum 15 und dem Strömungskanal 25 herstellen. Die Gasdurchtrittsöffnungen sind mit Flammenschutzfiltern 28, 29, 30, 31 versehen, die vorzugsweise als ebene Platten ausgebildet sein können. Diese Flammenschutzfilter 28 bis 31 können ebenso wie der Druckentlastungskörper 20 nach Figur 3 aus metallischen oder keramischen Material oder Glas ausgebildet sein, das in Partikelform, Kugelform, Faserform oder einem Gemisch aus diesen Formen vorliegt und durch mechanische Verbindung, Sintern oder Kleben zu einem festen Körper gebunden ist. Die Flammenschutzfilter 28 bis 31 weisen Gasdurchtrittsöffnungen in Form von Poren auf, die so eng und so lang sind, dass Flammen und glühende Partikel nicht hindurch gelangen können.

Während die Flammscnschutzfilter 28 bis 31 nach Figur 4 an einem als Träger dienenden Rechteckrohr angebracht sind, ist es auch möglich, plattenförmige Flammenschutzfilter ohne Zuhilfenahme eines Trägers untereinander direkt, z.B. durch Schweißen, zu verbinden.

Der Druckentlastungskörper 20 nach Figur 4 kann anstelle des Druckentlastungskörpers 20 nach Figur 3 bei jeder der vor- und nachstehend beschriebenen Ausführungsformen Anwendung finden. Auch kann die Form abweichend gewählt sein. Anstelle des Rechteckrohrs 26 können andere Rohre mit Polygonalquerschnitt, zum Beispiel Dreieckquerschnitt, Fünfeckquerschnitt, Sechseckquerschnitt usw., vorgesehen sein. Auch ist es möglich, den Druckentlastungskörper 20 nach Figur 3 mit einem von der Kreisform abweichenden Querschnitt auszubilden, zum Beispiel einem Dreieckquerschitt, Viereckquerschnitt, Fünf-oder Sechseckquerschnitt usw.

Das insoweit beschriebene Gehäuse 11 funktioniert wie folgt:
In Gebrauch ist der Deckel 14 fest mit dem Gehäusekörper verbunden, wobei entsprechende Verbindungsmittel, wie Klemmen, Schrauben oder dergleichen, in Figur 1 und 2 nicht veranschaulicht sind. In dem Innenraum 15 befinden sich Komponenten, die Zündquellen bilden können, wie beispielsweise Relais, Transistoren, Widerstände oder dergleichen Elemente, die sich in Betrieb erwärmen können. Befindet sich das Gehäuse 11 in einer explosiblen Atmosphäre, können brennbare oder explosible Gase in den Innenraum 15 gelangen. Werden sie dort gezündet, führt die eintretende Verpuffung zu einer Expansion der beteiligten Gase. Diese strömen sich dabei abkühlend durch den Druckentlastungskörper 20 in den Strömungskanal 25 und von dort über die Druckentlastungsöffnungen 16, 17 ins Freie. Beim Durchtritt durch den Druckentlastungskörper 20 werden die Gase soweit gekühlt, dass die in den Strömungskanal 25 gelangenden Gase keine Zündquelle für die explosible Umgebung mehr darstellen.

Aufgrund der großen Oberfläche des Druckentlastungskörpers 20 stellt dieser für die expandierenden Gase nur einen geringen Strömungswiderstand dar, so dass die bei einer Verpuffung auftretende Druckerhöhung in dem Innenraum 15 auf geringe Werte begrenzt werden kann.

Die Verbindung zwischen den Wandbereichen 18, 19 durch den Druckentlastungskörper 20 kann gehäusestabilisierend wirken. Dies gilt insbesondere bei großvolumigen dünnwandigen Gehäusen. Die Zugfestigkeit des Druckentlastungskörpers kann dazu genutzt werden, ein Ausbeulen der Wandbereiche 18, 19 zu verhindern.

Das Gehäuse 11 kann mehrere Druckentlastungskörper 20 nach jeder der vor- und nachstehend beschriebenen Bauarten enthalten. Dies gilt insbesondere für großvolumige Gehäuse, wie Schaltschränke oder dergleichen.

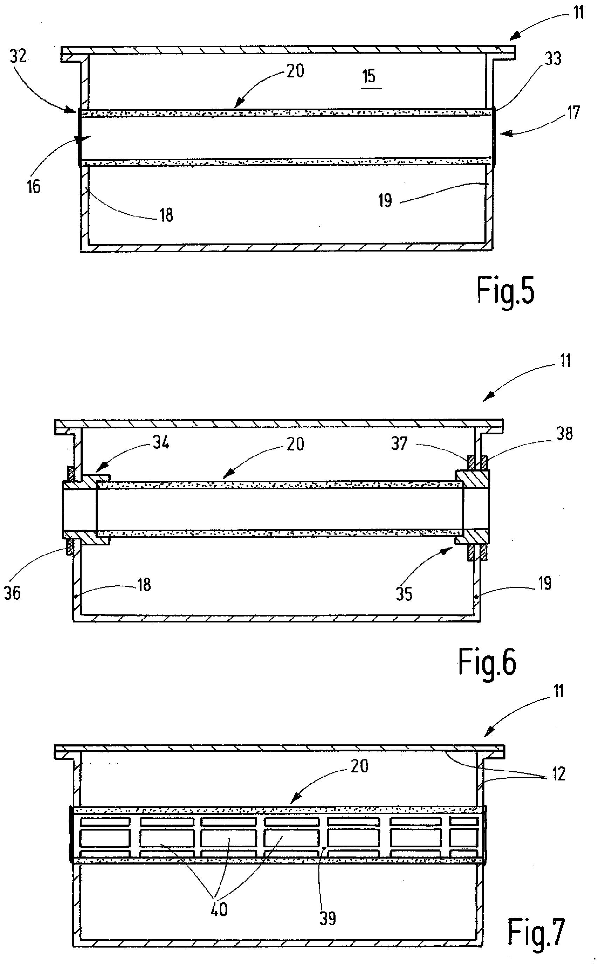

Figur 5 veranschaulicht eine abgewandelte Ausführungsform des Gehäuses 11. Wie ersichtlich, durchdringt der Druckentlastungskörper 20 die beiden an den Wandbereichen 18, 19 ausgebildeten Druckentlastungsöffnungen 16, 17. Zur Verbindung zwischen den Druckentlastungskörper 20 und dem jeweiligen Wandbereich 18, 19 kann jeweils ein ringförmige Schweißnaht 32, 33 vorgesehen sein, die um das Ende des Druckentlastungskörpers 20 oder eine nicht weiter dargestellte dessen jeweiliges Ende einfassende Manschette herumführt und ihn bzw. diese mit dem jeweiligen Wandbereich 18, 19 verbindet. Der Vorteil dieser Ausführungsform liegt in der besseren Zugänglichkeit der Verbindung zwischen Druckentlastungskörper 20 und Wandbereich 18, 19, zum Beispiel bei der Herstellung der Schweißnaht 32, 33. Diese Bauform eignet sich für alle Typen vor- oder nachstehend genannter und beschriebener Druckentlastungskörper 20.

Eine weiter abgewandelte Ausführungsform des Gehäuses 11 veranschaulicht Figur 6. Der Druckentlastungskörper 20 ist dort in Sockeln 34, 35 gefasst, die ihrerseits mit dem jeweiligen Wandbereich 18, 19 verbunden sind. Beispielsweise kann der Sockel 34 an einem entsprechenden Sitz den Druckentlastungskörper aufnehmen und dazu mit dem Druckentlastungskörper 20 mechanisch zum Beispiel durch Klemmen, Schrauben, sowie stoffschlüssig zum Beispiel durch Kleben oder Schweißen oder Löten verbunden sein. Der Sockel 34 kann die Druckentlastungsöffnung des Wandbereichs 18 durchsetzen und mit dem Wandbereich 18 stoffschlüssig, z.B. durch schweißen, oder zum Beispiel mittels einer Mutter 36 formschlüssig verbunden sein.

Vorzugsweise weist die gegenüber liegende Gehäusewand an dem Wandbereich 19 eine Öffnung mit einem Durchmesser auf, der größer ist als der Außendurchmesser des Sockels 34. Dieser kann somit durch die Öffnung des Wandbereichs 19 hindurch gesteckt werden. Zur Sicherung des Sockels 35 an dem Wandbereich 19 können zum Beispiel mehrere Muttern 37, 38 auf das Außengewinde des Sockels 35 aufgeschraubt sein. Es ist jedoch auch möglich, den Sockel 35 mit dem Wandbereich 19 zu verschweißen.

Bei der Ausführungsform nach Figur 7 kann der Druckentlastungskörper 20 nach jeder der vor- und nachstehend genannten Arten an der Wandanordnung 12 befestigt sein. Der zum Beispiel hohlzylindrische Druckentlastungskörper 20 kann aber ein Stützrohr 39 aufweisen, dessen Wandung eine Vielzahl großflächiger Öffnungen 40 aufweist, wobei das poröse Material des Druckentlastungskörpers außen an dem Stützrohr 39 anliegt. Das Stützrohr 39 kann den Druckentlastungskörper 20 aussteifen und seine mechanische Stabilität erhöhen.

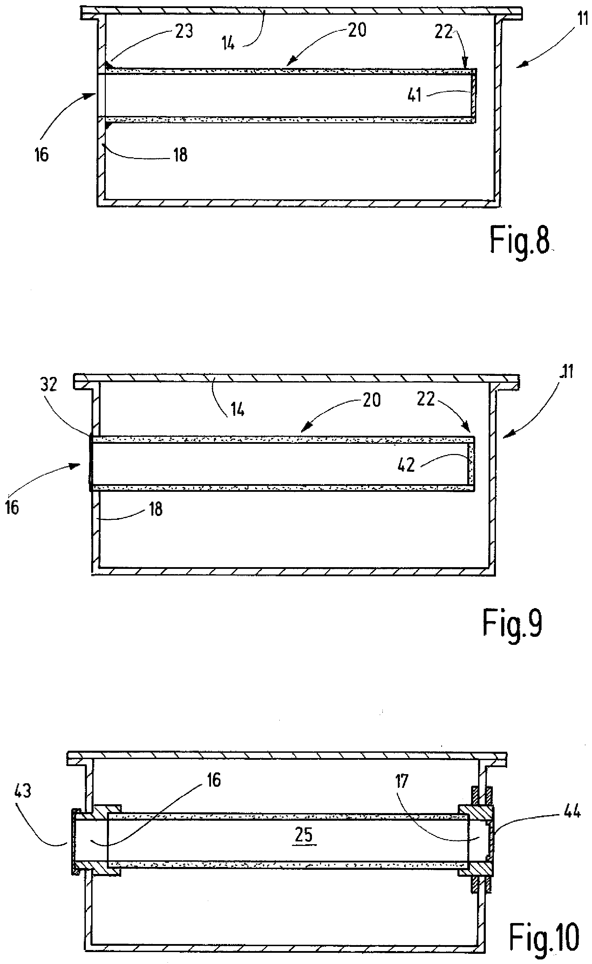

Es ist auch möglich, Gehäuse 11 so auszubilden, dass der Druckentlastungskörper 20 mit lediglich einer Druckentlastungsöffnung 16 kommuniziert und an seinem davon weg weisenden Ende 22 geschlossen ist, wie es die Figuren 8 und 9 veranschaulichen. Diese dienen lediglich der beispielhaften Veranschaulichung und stellen Abwandlungen der Befestigungsart nach Figur 2 und 5 dar, bei denen der Druckentlastungskörper 20 jeweils mit einer Schweißnaht 23 bzw. 32 innen oder außenliegend an den Wandbereich 18 befestigt ist. Jede andere beschriebene Befestigungsart, beispielsweise nach Art der Figur 6 mit einem Sockel 34 oder einem Sockel 35 kann ebenfalls genutzt werden. Das von der Druckentlastungsöffnung 16 abliegende Ende 22 kann durch einen festen gasundurchlässigen Verschluss 41 oder auch einen gasdurchlässigen Boden 42 verschlossen sein. Diese Art der Anordnung von Druckentlastungskörpern 20 in Gehäusen 11 eignet sich besonders für Gehäuse, bei denen ein den Innenraum vollständig durchquerender Druckentlastungskörper störend wäre oder bei denen der oder die Druckentlastungskörper 20 an Druckentlastungsöffnen anzuschließen sind, die den Deckel 14 durchsetzen. Außerdem können zwei oder mehrere solcher einseitig offenen Druckentlastungskörper 20 vorgesehen sein, um an verschiedenen Stellen des Deckels 14 und/oder des Gehäusekörpers 13 vorgesehene Druckentlastungsöffnungen angeordnet zu werden.

Bei jeder der vorstehend beschriebenen Ausführungsformen kann die Druckentlastungsöffnung 16 und/oder 17 mit einem Verschluss 43, 44 versehen sein. Der Verschluss kann jede Form eines mechanischen Mittels sein, das das Eindringen von Insekten, Schmutz und/oder Feuchtigkeit in den Strömungskanal 25 verhindert, andererseits aber ein Ausströmen von Gas aus diesem nicht oder nicht dauerhaft verhindert. Solche Verschlüsse 43, 44 können aufsteckbare aufrastbare oder aufschraubbare Kappen sein, wie es Figur 10 am Beispiel des Verschlusses 43 veranschaulicht. Solche Kappen sind insbesondere so gestaltet, dass sie, falls in dem Strömungskanal 25 ein ausreichender Überdruck herrscht, abgesprengt werden, aufreißen oder auf sonstige Weise geöffnet werden. Auch kann der Verschluss ein in die Druckentlastungsöffnung eingesetztes Sperrelement sein, wie es Figur 10 am Beispiel des Verschlusses 44 in der Druckentlastungsöffnung 17 veranschaulicht. Der Verschluss kann ein in der Druckentlastungsöffnung 17 formschlüssig, stoffschlüssig oder auf sonstige Weise gehaltenes Element sein, das bei Überdruck in dem Strömungskanal 25 aus der Druckentlastungsöffnung 17 herausgedrückt wird oder selbst aufreißt und auf diese Weise den Strömungsweg freigibt. Auch können anstelle von absprengbaren oder aufreißbaren Verschlusselementen schwenkbare Klappen oder dergleichen vorgesehen werden.

Das erfindungsgemäße Gehäuse 11 weist einen Druckentlastungskörper 20 auf, der als Rohrkörper ausgebildet ist und sich durch den Innenraum 15 des Gehäuses 11 erstreckt. Der Druckentlastungskörper 20 ist an mindestens einem Ende 21 vorzugsweise an seinen beiden Enden 22 mit Wandbereichen 18, 19 des Gehäuses 11 verbunden, so dass sein Strömungskanal mit Druckentlastungsöffnungen 16, 17 fluchtet. Diese Anordnung ermöglicht den Bau dünnwandiger und somit leichter explosionsgesicherter Gehäuse 11.

### Bezugszeichen:

- 11: Gehäuse
- 12: Wandanordnung
- 13: Gehäusekörper
- 14: Deckel
- 15: Innenraum
- 16: erste Druckentlastungsöffnung
- 17: zweite Druckentlastungsöffnung
- 18: erster Wandbereich
- 19: zweiter Wandbereich
- 20: Druckentlastungskörper
- 21: erstes Ende des Druckentlastungskörpers
- 22: zweites Ende des Druckentlastungskörpers
- 23, 24: Schweißnähte
- 25: Strömungskanal
- 26: Rechteckrohr
- 27: Gasdurchtrittsöffnungen
- 28 - 31: Flammenschutzfiltern
- 32, 33: Schweißnaht
- 34: erster Sockel
- 35: zweiter Sockel
- 36 - 38: Muttern
- 39: Stützrohr
- 40: Öffnungen
- 41: gasundurchlässiger Verschluss
- 42: gasdurchlässiger Boden
- 43: erster Verschluss
- 44: zweiter Verschluss

## Patentansprüche

1. Gehäuse (11) zur Aufnahme von Elementen, die Zündquellen bilden können, zum Einsatz in explosionsgefährdeter Umgebung,
mit einer Wandanordnung (12), die einen die Elemente aufnehmenden Innenraum (15) umschließt und wenigstens eine Druckentlastungsöffnung (16) aufweist,
mit einem an der Druckentlastungsöffnung (16) angeordneten Druckentlastungskörper (20),
**dadurch gekennzeichnet, dass** der Druckentlastungskörper (20) rohrförmig ausgebildet ist, in den Innenraum (15) ragt und Poren aufweist, deren Weite so gering und deren Länge so groß ist, dass Flammen oder glühende Partikel aus dem Innenraum (15) nicht in einen inneren Strömungskanal (25) des Druckentlastungskörpers (20) gelangen können,
wobei der Strömungskanal (25) durch die wenigstens eine Druckentlastungsöffnung (16) ins Freie führt.

2. Gehäuse nach Anspruch 1, **dadurch gekennzeichnet, dass** der Druckentlastungskörper (20) den Innenraum (15) vollständig durchquerend angeordnet ist.

3. Gehäuse nach einem der vorstehenden Ansprüche, **dadurch gekennzeichnet, dass** die Wandanordnung (12) eine zweite Druckentlastungsöffnung (17) aufweist und dass der Druckentlastungskörper (20) zwischen den beiden Druckentlastungsöffnungen (16, 17) gehalten ist.

4. Gehäuse nach Anspruch 3, **dadurch gekennzeichnet, dass** der Druckentlastungskörper (20) an beide Druckentlastungsöffnungen (16, 17) fest angeschlossen ist.

5. Gehäuse nach einem der vorstehenden Ansprüche, **dadurch gekennzeichnet, dass** der Druckentlastungskörper (20) mit der Wandanordnung (12) verschweißt ist.

6. Gehäuse nach Anspruch einem der vorstehenden Ansprüche, **dadurch gekennzeichnet, dass** der Druckentlastungskörper (20) an mindestens einem Ende (21) mit einem Sockelkörper (34) verbunden ist, der seinerseits mit der Wandanordnung (12) verbunden ist.

7. Gehäuse nach einem der vorstehenden Ansprüche, **dadurch gekennzeichnet, dass** der Druckentlastungskörper (20) ein Rohrkörper aus porösem Material ist.

8. Gehäuse nach einem der vorstehenden Ansprüche, **dadurch gekennzeichnet, dass** der Druckentlastungskörper (20) ein Rohr aus nichtporösem Material ist, der mindestens eine Radialöffnung (27) aufweist, an der mindestens ein Druckentlastungskörper (28) aus porösem Material angeordnet ist.

9. Gehäuse nach einem der vorstehenden Ansprüche, **dadurch gekennzeichnet, dass** die Druckentlastungsöffnung (16) mit einem Verschluss (43) versehen ist.

10. Gehäuse nach einem der vorstehenden Ansprüche, **dadurch gekennzeichnet, dass** die Wandanordnung (12) an zwei einander gegenüberliegenden Wandbereichen (18, 19) jeweils eine Druckentlastungsöffnung (16, 17) aufweist, wobei die Druckentlastungsöffnungen (16, 17) unterschiedliche Durchmesser aufweisen.

## Claims

1. Housing (11) for locating elements therein, which could form ignition sources, for the use in explosive environments,
having a wall arrangement (12), which encloses an interior (15) and comprises at least one pressure relief opening (16),
having a pressure relief body (20) arranged at the pressure relief opening (16),
**characterized in that** the pressure relief body (20) is configured in a tube-shaped manner, extends into the interior (15) and comprises pores, the width and the length thereof is dimensioned so that flames and glowing particles cannot escape from the interior (15) into an inner flow channel (25) of the pressure relief body (20),
wherein the flow channel (25) extends through the at least one pressure relief opening (16) to the outside.

2. Housing according to claim 1, **characterized in that** the pressure relief body (20) is arranged in a manner completely crossing the interior (15).

3. Housing according to any of the preceding claims, **characterized in that** the wall arrangement (12) comprises a second pressure relief opening (17) and that the pressure relief body (20) is held between the two pressure relief openings (16, 17).

4. Housing according to claim 3, **characterized in that** the pressure relief body (20) is rigidly connected to the two pressure relief openings (16, 17).

5. Housing according to any of the preceding claims, **characterized in that** the pressure relief body (20) is welded to the wall arrangement (12).

6. Housing according to any of the preceding claims, **characterized in that** the pressure relief body (20) is connected with a base body (34) at least with one end (21), the base body (34) being in turn connected with the wall arrangement (12).

7. Housing according to any of the preceding claims, **characterized in that** the pressure relief body (20) is a tube body made of porous material.

8. Housing according to any of the preceding claims, **characterized in that** the pressure relief body (20) is a tube made of non-porous material comprising at least one radial opening (27) at which at least one pressure relief body (28) made of porous material is arranged.

9. Housing according to any of the preceding claims, **characterized in that** the pressure relief opening (16) is provided with a closure (43).

10. Housing according to any of the preceding claims, **characterized in that** the wall arrangement (12) comprises a pressure relief opening (16, 17) at two opposed wall sections (18, 19) respectively, wherein the pressure relief openings (16, 17) have different diameters.

## Revendications

1. Boîtier (11) destiné à accueillir des éléments pouvant constituer des sources d'inflammation, en vue d'une utilisation dans un environnement présentant un risque d'explosion,
comprenant un agencement de parois (12) qui entoure un espace intérieur (15) accueillant les éléments et présente au moins une ouverture de décompression (16),
comprenant un corps de décompression (20) disposé sur l'ouverture de décompression (16),
**caractérisé en ce que** le corps de décompression (20) est réalisé sous une forme tubulaire, avance dans l'espace intérieur (15) et présente des pores dont la largeur est si faible et dont la longueur est si grande que des flammes ou des particules incandescentes provenant de l'espace intérieur (15) ne puissent pas pénétrer dans un canal d'écoulement (25) interne du corps de décompression (20),
le canal d'écoulement (25) menant à l'air libre à travers l'ouverture de décompression (16), au nombre d'au moins une.

2. Boîtier selon la revendication 1, **caractérisé en ce que** le corps de décompression (20) est disposé de manière à traverser complètement l'espace intérieur (15).

3. Boîtier selon l'une des revendications précédentes, **caractérisé en ce que** l'agencement de parois (12) présente une deuxième ouverture de décompression (17) et **en ce que** le corps de décompression (20) est maintenu entre les deux ouvertures de décompression (16, 17).

4. Boîtier selon la revendication 3, **caractérisé en ce que** le corps de décompression (20) est raccordé solidement aux deux ouvertures de décompression (16, 17).

5. Boîtier selon l'une des revendications précédentes, **caractérisé en ce que** le corps de décompression (20) est soudé à l'agencement de parois (12).

6. Boîtier selon revendication l'une des revendications précédentes, **caractérisé en ce que** le corps de décompression (20) est relié par au moins une extrémité (21) à un corps formant socle (34) qui est relié à son tour à l'agencement de parois (12).

7. Boîtier selon l'une des revendications précédentes, **caractérisé en ce que** le corps de décompression (20) est un corps tubulaire en matériau poreux.

8. Boîtier selon l'une des revendications précédentes, **caractérisé en ce que** le corps de décompression (20) est un tube en matériau non poreux qui présente au moins une ouverture radiale (27) sur laquelle est disposé au moins un corps de décompression (28) en matériau poreux.

9. Boîtier selon l'une des revendications précédentes, **caractérisé en ce que** l'ouverture de décompression (16) est pourvue d'une fermeture (43).

10. Boîtier selon l'une des revendications précédentes, **caractérisé en ce que** l'agencement de parois (12) présente, dans deux zones de paroi (18, 19) situées en vis-à-vis l'une de l'autre, respectivement une ouverture de décompression (16, 17), les ouvertures de décompression (16, 17) présentant des diamètres différents.
